# EUROPÄISCHE PATENTSCHRIFT

(11) **EP 2 115 538 B1**
(45) Veröffentlichungstag und Bekanntmachung des Hinweises auf die Patenterteilung: **02.03.2011**
(21) Anmeldenummer: 08707141.1
(22) Anmeldetag: 21.01.2008
(51) Int. Cl.: G05B 19/042, G01B 5/008

(54) **STEUERUNG EINES BETRIEBES EINES KOORDINATENMESSGERÄTES**
CONTROL OF AN OPERATION OF A COORDINATE MEASURING DEVICE
COMMANDE D'UN FONCTIONNEMENT D'UN APPAREIL DE MESURE DE COORDONNÉES

(30) Priorität: 23.01.2007 DE 102007004423
(43) Veröffentlichungstag der Anmeldung: 11.11.2009
(73) Patentinhaber: Carl Zeiss Industrielle Messtechnik GmbH, 73447 Oberkochen (DE)
(72) Erfinder: RUCK, Otto, 73479 Pfahlheim (DE)
(74) Vertreter: Bressel, Burkhard
(86) Internationale Anmeldenummer: PCT/EP2008/000408
(87) Internationale Veröffentlichungsnummer: WO 2008/089929

(56) Entgegenhaltungen:
- EP-A- 0 940 651
- EP-A- 1 422 629
- WO-A-2006/029994

## Beschreibung

Die Erfindung betrifft eine Steuerung und ein Verfahren zum Steuern eines Koordinatenmessgerät-Betriebes.

Koordinatenmessgeräte können in unterschiedlichen Konfigurationen betrieben werden, wobei auch bei einem bestimmten Exemplar eines Koordinatenmessgeräts Komponenten ausgetauscht und/oder ergänzt werden können. Dies gilt insbesondere für den Messkopf, der zur Messung der Koordinaten verfahrbar ist und z.B. vom schaltenden Typ oder zum tastenden Typ gehört. Der Begriff Koordinatenmessgerät ist aber nicht auf Geräte beschränkt, bei denen ein Messkopf in Kontakt zu dem zu vermessenden Gegenstand gelangt, um die Koordinaten zu messen. Vielmehr kann die Messung auch z.B. durch optisches Abtasten oder Scannen erfolgen. Ferner wird unter einem Koordinatenmessgerät insbesondere auch ein Gerät verstanden, das Abmessungen von Gegenständen ermitteln kann, die erst noch in Koordinaten eines Koordinatensystems umgerechnet werden müssen.

Aufgrund der verschiedenen möglichen Konfigurationen muss die Steuerung des Koordinatenmessgeräts an die jeweils gültige Konfiguration angepasst werden, wenn sich die Konfiguration geändert hat.

Im Sprachgebrauch dieser Beschreibung ist die jeweilige Konfiguration eines Koordinatenmessgeräts durch die Kombination der vorhandenen Komponenten definiert. Neben Hardware-Komponenten, wie z.B. dem Messkopf oder einem speziellen Messtisch, wird unter einer Komponente auch z.B. eine Software-Komponente der Steuerung verstanden. Auch nicht unmittelbar zur Messanordnung gehörende Gegenstände und andere Faktoren, die Einfluss auf die Messanordnung und/oder auf den Messbetrieb haben, können als Komponente bezeichnet werden.

Dementsprechend sind Betriebsparameter, die für den Messbetrieb in einer bestimmten Konfiguration charakteristische Konstanten sind, nicht nur Maschinenparameter, wie z.B. Maschinenabmessungen des Koordinatenmessgerätes, maximale Beschleunigungen, maximale Geschwindigkeiten, Geschwindigkeiten oder Kräfte beim Antasten eines Gegenstandes. Vielmehr gehören zu den Betriebsparametern auch z.B. Positionen oder Abmessungen der Messanordnung oder im Bereich der Messanordnung, die für den Messbetrieb von Bedeutung sind, z.B. Position und Art eines Magazins, in dem verschiedene Taststifte aufgenommen werden können. Weitere Zusatzgeräte und Messhilfsmittel, deren Position und Art für den Messbetrieb von Bedeutung sein können, sind z.B. Gegenhalter für Achsen von drehbaren Messtischen. Solche Zusatzgeräte und Messhilfsmittel machen bestimmte Bereiche beim Messbetrieb für die beweglichen Teile eines Koordinatenmessgerätes unzugänglich oder führen zu örtlichen Abhängigkeiten von Betriebsparametern, wie z.B. reduzierten Geschwindigkeiten im Nahbereich von Gegenständen.

Neben Betriebsparametern, die insbesondere abhängig vom Ort des Messkopfes sein können, abhängig von der Zeit sein können und/oder aus anderen Gründen auch für eine gegebene Konfiguration variieren können, gibt es auch Informationen, die für die Ermittlung von Betriebsparametern von Bedeutung sind, z.B. die Information, dass sich Personen im Bereich der Messanordnung aufhalten und daher der Messkopf mit geringerer Geschwindigkeit oder geringerer Beschleunigung bewegt werden muss. Ferner gibt es Vorschriften zur Ermittlung von Betriebsparametern, die vor dem Beginn des Messbetriebes und/oder erst nach dem Beginn des Messbetriebes zu beachten sind. Eine Vorschrift, die bereits vor dem Beginn des Messbetriebes zu beachten ist, ist z.B. eine Berechnungsvorschrift zur Berechnung der Antastkraft beim Antasten eines zu vermessenden Gegenstandes durch einen Messkopf des Koordinatenmessgerätes. Eine Vorschrift, die auch nach dem Beginn des Messbetriebes zu beachten ist, ist z.B. die Vorschrift, abhängig von der Anwesenheit von Personen im Bereich der Messanordnung (die beispielsweise durch Lichtschranken automatisch festgestellt werden kann) die maximale Geschwindigkeit, mit der der Messkopf bewegt wird, auf einen vorgegebenen geringeren Maximalwert zu reduzieren oder um einen Prozentsatz zu reduzieren. Weitere Vorschriften sind z.B., die Antastgeschwindigkeit des Messkopfes oder seine Anfahrbeschleunigung und/oder Fahrwege des Messkopfes in Abhängigkeit von der momentanen Position des Messkopfes oder eines Sensors im Messbereich der Maschine zu reduzieren bzw. zu beschränken. Es können auch komplexe Vorschriften definiert sein, die z.B. in Software einer Steuerung implementiert sind, so dass sich z. B. abhängig von der geforderten Genauigkeit beim Bestimmen der Koordinaten, der Weichheit des Materials des zu vermessenden Gegenstandes, des Durchmessers eines Taststiftes des Messkopfes und/oder weitere Informationen z.B. die zulässige Geschwindigkeit oder Geschwindigkeitskomponente, Beschleunigung oder Beschleunigungskomponente, die Antastkraft und/oder weitere Betriebsparameter berechnet, angepasst und/oder verändert werden können.

Die Betriebsparameter können zu einem gemeinsamen Parametersatz zusammengefasst werden, zu dem auch eine oder mehrere Vorschriften zur Berechnung der Betriebsparameter hinzugefügt werden können. Wenn sich die Konfiguration des Koordinatenmessgerätes ändert, ergibt sich das Problem, dass der dann jeweils adäquate Betriebsparameterwert ermittelt werden muss. Insbesondere sollen Betriebsparameter wiederum verändert werden und/oder in einen Zustand wieder hergestellt werden, der zu einem früheren Zeitpunkt oder für eine frühere Konfiguration gültig war. Besonders problematisch ist die Veränderung oder Wiederherstellung der Betriebsparameter, wenn während des Messbetriebes, insbesondere während der Vermessung eines bestimmten Gegenstandes oder einer Anordnung von Gegenständen, Trägerkomponenten oder Systeme zum Tragen von Messköpfen oder Sensoren, die Sensoren oder Sensorensysteme selbst, Zusatzgeräte und/oder Messhilfsmittel (Beispiele hierfür wurden bereits erwähnt) hinzugefügt, entfernt oder gewechselt werden. Insbesondere kommt es häufig vor, dass Taststifte oder -kombinationen an der Pinole eines Koordinatenmessgerätes, Rundtische, auf denen ein Messobjekt um eine Drehachse gedreht werden kann, Gegenhalter oder Magazine für Taster hinzugefügt, entfernt oder gewechselt werden. Ein Beispiel für einen solchen Rundtisch oder Drehtisch ist in DE 3637 410 A1 beschrieben.

Ein Beispiel verdeutlicht dies: Die Maximalgeschwindigkeit, mit der eine Maschine entlang der X-Achse eines Koordinatensystems einen Messkopf bewegen kann, beträgt 300 mm/s. Aufgrund des Vorhandenseins eines Gegenhalters für einen Messtisch sind generell oder in einem bestimmten Ortsbereich nur 128 mm/s zulässig. Eine Bedienungseinrichtung, die von Personal bedient werden kann, verfügt aber über eine so genannte Override-Funktion, durch die momentan Geschwindigkeiten des Messkopfes oberhalb von 180 mm/s unzulässig sind. Ein Träger für den Messsensor, der während des Messvorganges eingewechselt wurde, erlaubt aufgrund mechanischer konstruktiver Eigenschaften und aufgrund örtlicher Gegebenheiten nur eine maximale Geschwindigkeit von 70 mm/s. Ferner ist ein Tasterwechselteller vorhanden, so dass in der X-Richtung nur mit 50 % der maximal möglichen Beschleunigung gefahren werden darf, um eine sichere Kollisionserkennung durch die Steuerung zu gewährleisten. Dies hat wiederum eine Rückwirkung auf den Bremsweg und somit die Maximalgeschwindigkeit. Ferner hat der Betreiber durch Programmierung der Steuerungssoftware die Maximalgeschwindigkeit auf 50 mm/s reduziert. Nun soll der Tasterwechselteller aus dem Messbereich entfernt und durch ein Magazin für andere Messmittel ersetzt werden, dessen Anwesenheit die Maximalgeschwindigkeit wieder, jedoch in anderer Weise reduzieren könnte. Es ist daher mit erheblichem Aufwand verbunden, die jetzt gültige zulässige Maximalgeschwindigkeit für die Bewegung des Messkopfes in X-Richtung zu ermitteln.

EP 0 940 651 A2 beschreibt ein Verfahren zum Steuern eines Betriebes eines Koordinatenmessgerätes, wobei zumindest ein Betriebsparameter - wie z.B. maximale Geschwindigkeit, maximale Beschleunigung, Grenzort eines Bewegungsbereiches oder Grenzwert für eine Signalerkennung - ermittelt wird, der während des Betriebes Gültigkeit haben soll.

Es ist eine Aufgabe der vorliegenden Erfindung, eine Steuerung und ein Verfahren zum Steuern eines Koordinatenmessgerätes anzugeben, die eine zuverlässige und eindeutige Ermittlung der Betriebsparameter des Koordinatenmessgerätes bzw. der Messanordnung ermöglichen. Insbesondere sollen verschiedene Betriebsparameter in unterschiedlichen Konfigurationen von Koordinatenmessgeräten ermittelt werden können, wobei zumindest teilweise gleiche Komponenten oder gleiche Typen von Komponenten verwendbar sein sollen.

Gemäß einem Aspekt der vorliegenden Erfindung sind die Betriebsparameter und/oder die Vorschriften und/oder Informationen zum Ermitteln des Betriebsparameters jeweils in Bezug auf eine bestimmte Komponente definiert. Dadurch ist es möglich, die entsprechenden Daten mit der Komponente mitzuliefern oder z.B. abzurufen, wenn feststeht, dass die Komponente Teil einer bestimmten Konfiguration ist. Dabei ist es jedoch möglich, dass aus den für die Komponente definierten Daten der Betriebsparameter erst dann ermittelt werden kann, wenn eine oder mehrere der anderen Komponenten der bestimmten Konfiguration bekannt sind. Z.B. kann ein Messkopf je nachdem, ob er mit einem ersten oder einem zweiten Koordinatenmessgerät kombiniert wird, unterschiedliche maximale Geschwindigkeiten oder Beschleunigungen zulassen.

Insbesondere soll es möglich sein, Einstellungen (d.h. Zustände) der Steuerung in Bezug auf die Ermittlung und/oder Verwendung der Betriebsparameter verändern zu können und auch frühere Zustände wieder herstellen zu können, z.B. wenn die frühere Konfiguration wieder hergestellt wird.

Gemäß einem zweiten Aspekt der Erfindung, der mit dem ersten Aspekt kombiniert werden kann, wird insbesondere für jede optionale und/oder auswechselbare Komponente (vorzugsweise jedoch für alle Komponenten) eine Datengruppe definiert, die die sämtlichen in Bezug auf die Komponente definierten Daten hinsichtlich einer Ermittlung und/oder Verwendung von Betriebsparametern aufweist. Außerdem kann eine entsprechende Datengruppe für ein oder mehrere Basiskomponenten eines Koordinatenmessgerätes definiert sein. Durch Kombination der Datengruppen für diejenigen Komponenten, die Teil einer bestimmten Konfiguration sind, kann daher auf einfache und zuverlässige Weise der jeweils insgesamt für die Konfiguration gültige Parametersatz ermittelt werden. Außerdem können die jeweils für die Konfiguration gültigen Vorschriften für die Ermittlung und Verwendung der Betriebsparameter aus den Datengruppen ermittelt werden.

Gemäß einem dritten Aspekt der Erfindung, der mit einem oder mehreren der anderen Aspekte kombiniert werden kann, wird gemäß dem im Folgenden beschriebenen Verfahren vorgegangen: Es wird eine Reihenfolge für die Komponenten vorgegeben oder eine solche Reihenfolge ist bereits vorgegeben. Somit gibt es eine Komponente, die hinsichtlich der Reihenfolge an erster Stelle steht und zumindest eine Komponente, die in der Reihenfolge an letzter Stelle steht. Vorzugsweise steht an jeder Stelle in der Reihenfolge lediglich eine Komponente. Es ist jedoch nicht ausgeschlossen, dass in der Reihenfolge an derselben Stelle auch zwei oder mehr Komponenten stehen.

Gemäß der Reihenfolge der Komponenten, bei der es sich um keine Reihenfolge einer physikalischen Anordnung der Komponenten handelt, sondern um eine logische Reihenfolge, werden Verfahrenshandlungen für die Ermittlung der Betriebsparameter ausgeführt. Unter einer Verfahrenshandlung zur Ermittlung eines Betriebsparameters wird auch eine Verfahrenshandlung verstanden, in der lediglich eine Information zur Ermittlung des Betriebsparameters und/oder eine Vorschrift zur Ermittlung des Betriebsparameters identifiziert wird, als gültige Information oder Vorschrift übernommen wird und/oder die Vorschrift ausgeführt wird.

Gemäß einer Ausgestaltung dieses Aspekts der Erfindung wird Folgendes vorgeschlagen:

Ein Verfahren zum Steuern eines Betriebes eines Koordinatenmessgeräts, wobei zumindest ein Betriebsparameter - wie z. B. maximale Geschwindigkeit, maximale Beschleunigung, Grenzort eines Bewegungsbereich oder Grenzwert für eine Signalerkennung - ermittelt wird, der während des Betriebes Gültigkeit haben soll.

Es werden folgende Schritte ausgeführt:
a) einer Mehrzahl von Komponenten des Koordinatenmessgeräts wird jeweils ein Wert des Betriebsparameters und/oder eine Vorschrift und/oder Information zur Ermittlung des Betriebsparameters zugeordnet oder kann jeweils zugeordnet werden,
b) für die Mehrzahl der Komponenten wird eine Reihenfolge der Ermittlung des Betriebsparameters vorgegeben,
c) bei der Ermittlung des Betriebsparameters in der vorgegebenen Reihenfolge der Ermittlung wird für jede Komponente wie folgt vorgegangen, wobei mit der Komponente begonnen wird, die in der Reihenfolge an erster Stelle steht:
   - ist der Komponente ein Wert des Betriebsparameters zugeordnet, wird dieser als für den Betrieb gültiger Wert des Betriebsparameters übernommen,
   - ist der Komponente kein Wert des Betriebsparameters zugeordnet, bleibt ein bisher gültiger Wert des Betriebsparameters weiterhin gültig,
   - ist eine weitere Komponente in der Reihenfolge vorhanden, wird mit dieser Komponente fortgefahren.

Die Übernahme eines neuen gültigen Wertes kann von der Beachtung einer Vorschrift abhängig sein, die in Bezug auf den Betriebsparameter gültig ist. Alternativ oder zusätzlich kann in Schritt c) bei der Ermittlung des Betriebsparameters in der vorgegebenen Reihenfolge wie folgt vorgegangen werden, wobei mit der Komponente begonnen wird, die in der Reihenfolge an erster Stelle steht.
- wenn der Komponente eine Vorschrift zur Ermittlung des Betriebsparameters zugeordnet ist, wird diese Vorschrift ausgeführt und/oder als gültige Vorschrift übernommen und/oder,
- wenn der Komponente eine Information zur Ermittlung des Betriebsparameters zugeordnet ist, wird die Information als gültige Information übernommen,
- wenn eine weitere Komponente in der Reihenfolge vorhanden ist, wird mit dieser Komponente fortgefahren.

Wenn sowohl geprüft wird, ob ein Betriebsparameter als neuer gültiger Betriebsparameter zu übernehmen ist, als auch geprüft wird, ob eine Vorschrift und/oder eine Information zur Ermittlung des Betriebsparameters zu übernehmen ist und/oder die Vorschrift auszuführen ist, kann die Reihenfolge der Komponenten zweimal durchlaufen werden, wobei in einem Durchlauf auf den Betriebsparameter geprüft wird bzw. neue Werte des Betriebsparameters gegebenenfalls als gültige Werte übernommen werden, und wobei in dem anderen Durchlauf die Vorschrift und/oder Information übernommen bzw. ausgeführt wird. Vorzugsweise jedoch wird die Reihenfolge der Komponenten nur einmal durchlaufen und wird, wenn eine Komponente an der Reihe ist, sowohl ein Wert des Betriebsparameters als gültig übernommen als auch gegebenenfalls eine Vorschrift und/oder Information zur Ermittlung des Betriebsparameters als gültig übernommen bzw. die Vorschrift ausgeführt.

Aufgrund der Reihenfolge der Ermittlung, die für die Komponenten vorgegeben ist oder wird, kann der korrekte für den Betrieb des Koordinatenmessgerätes gültige Parametersatz bzw. Satz von Vorschriften und Informationen ermittelt werden, ohne dass es einer komplizierten Logik bedarf, die von vornherein alle möglichen Konfigurationen berücksichtigt. Vielmehr wird in Form der Reihenfolge eine zuverlässige Abarbeitungsvorschrift festgelegt, so dass auch frühere Zustände, die zu früheren Konfigurationen gehören, wiederhergestellt werden können. Insbesondere können in der vorgegebenen Reihenfolge Komponenten oder Komponentenarten berücksichtigt sein, die zumindest in manchen der möglichen Konfigurationen nicht vorhanden sind. Ist die Komponente oder Komponentenart in einer momentanen Konfiguration des Koordinatenmessgerätes nicht vorhanden, wird sie im Verfahrensschritt c) nicht berücksichtigt, d.h. es wird insbesondere nicht für diese Komponente oder Komponentenart geprüft, ob ein Wert eines Betriebsparameters als gültiger Wert zu übernehmen ist und/oder ob eine Vorschrift und/oder Information zur Ermittlung des Betriebsparameters als gültig zu übernehmen ist bzw. die Vorschrift auszuführen ist.

Es ist jedoch auch möglich, dass von der vorgegebenen Reihenfolge separate Regeln existieren, aus denen sich eindeutig ergeben, an welche Stelle in der Reihenfolge eine Komponente einzufügen ist, wenn diese in die Konfiguration aufgenommen wird. Umgekehrt bedarf es keiner Regeln für die Entfernung von Komponenten, da eine in einer momentanen Konfiguration nicht mehr vorhandene Komponente einfach aus der Reihenfolge entfernt wird. Die erwähnten separaten Regeln können insbesondere darin bestehen, dass die Basiskomponenten, wie z.B. das eigentliche Koordinatenmessgerät mit den zugehörigen Antrieben, an erster Stelle der Reihenfolge steht, dass in vorgegebener Weise an den nächstfolgenden Stellen der Reihenfolge Zusatzgeräte und Messhilfsmittel, wie Messtische und Sensor- bzw. Tastermagazine stehen, dass an der nächstfolgenden Stelle der Reihenfolge wiederum in vorgegebener Weise Träger zum Tragen und/oder Bewegen von Messsensoren, wie z.B. Tasterträger, stehen, dass an der nächsten Stelle in der Reihenfolge der eigentliche Sensor (z.B. ein Taster oder Lasersensor) steht und dass an letzter Stelle ein Programm oder Programmteil zur Steuerung des Betriebes des Koordinatenmessgerätes steht, wobei z.B. ein Anwender für das Programm oder für den Programmteil in Bezug auf den Betriebsparameter eine Vorgabe machen kann. Bei den Trägern kann beispielsweise vorgegeben sein, dass in der Reihenfolge zunächst der unmittelbar an dem Koordinatenmessgerät angebrachte Träger steht und erst an nächster Stelle in der Reihenfolge der wiederum an diesem Träger angebrachte Sub-Träger steht, welcher den eigentlichen Sensor trägt. Die Reihenfolge der Komponentenarten entspricht daher dem mechanischen Aufbau der Konfiguration von Koordinatenmessgeräten. Ein Beispiel für eine Anordnung mit Träger und Sub-Trägem ist die in EP 0 317 967 beschriebene Dreh-Schwenk-Einrichtung für Tastköpfe von Koordinatenmessgeräten mit mindestens zwei motorisch verstellbaren Drehachsen, welches gemäß Figur 5 dieser Druckschrift an einer Pinole eines Koordinatenmessgerätes (KMG) angebracht ist. Das an dem KMG angebrachte erste Gehäuseteil der Einrichtung stellt den Träger dar, der ein um eine erste Drehachse drehbares zweites Gehäuseteil (den ersten Sub-Träger) trägt. Im zweiten Gehäuseteil ist eine um eine zweite Drehachse drehbare Aufnahme (der zweite Sub-Träger) gelagert, an die z. B. ein Tastkopf angesetzt werden kann.

Ein Sub-Träger ist eine Einrichtung, die von einem Träger getragen wird und Eigenschaften eines Trägers hat. Wie in dem zuvor genannten Beispiel kann der Subträger eine Drehbeweglichkeit des Sensors gegenüber dem KMG erzeugen. Der Träger oder Sub-Träger kann z. B. einen Tastkopf vom messenden Typ tragen, oder einen anderen Sensor. Unter einem Sensor wird eine Einrichtung oder ein System verstanden, das oder die ein Werkstück abtastet, z. B. optisch und/oder mechanisch tastend. Der Sensor kann daher z. B. eine Kamera, ein taktiler Tastkopf oder ein einfacher Taststift an einem Wechselteller sein.

Bei einer Ausgestaltung ohne Sub-Träger kann ein Sensor (z. B. ein Tastkopf vom messenden Typ mit einer Wechselschnittstelle für weitere Messeinrichtungen) an dem Träger oder unmittelbar an dem KMG angebracht sein.

Vorzugsweise sind alle möglichen Komponenten bereits nach ihren Komponentenarten definiert und sind die Komponentenarten bereits für eine Vielzahl von möglichen Konfigurationen in der Reihenfolge vorgegeben, so dass lediglich für eine konkrete Konfiguration nur bestimmt werden muss, zu welcher Komponentenart eine Komponente tatsächlich vorhanden ist. Aus der Reihenfolge der Komponentenarten ergibt sich dann zweifelsfrei die vorgegebene Reihenfolge der Ermittlung.

Insbesondere ist es möglich, dass zumindest einer der Komponenten ein Wert des Betriebsparameters zugeordnet wird, wobei der Wert abhängig von zumindest einer weiteren Komponente und/oder einer Kombination von Komponenten ist. Z.B. kann ein Parameter eines Trägers für Sensoren von der Art der Basis des Koordinatenmessgerätes, d.h. der eigentlichen Maschine, abhängig sein (z.B. die Geschwindigkeit zum Antasten des Messobjekts). Solche Parameter fallen in die unten noch zu beschreibende Parameterkategorie "Zielsystemparameter". Daher ist es vorteilhaft, wenn die eigentliche Maschine in der Reihenfolge der Komponenten vor den Komponenten steht, deren Parameter von der Maschine abhängig sein können. Andernfalls ist es aber auch möglich, bei der Abarbeitung der Reihenfolge zur Ermittlung der Betriebsparameter eine Ermittlungsvorschrift als gültig zu übernehmen (oder einen von weiteren Bedingungen abhängigen Parameter), wenn die Abarbeitungsreihenfolge bei der entsprechenden Komponente mit dem abhängigen Parameter angelangt ist. Daher kann zumindest einer der Komponenten eine Vorschrift zur Ermittlung des Betriebsparameters zugeordnet sein, wobei die Vorschrift abhängig von zumindest einer weiteren Komponente und/oder einer Kombination von Komponenten ist.

Ein Wert des Betriebsparameters und/oder eine Vorschrift und/oder Informationen zur Ermittlung des Betriebsparameters kann auch einem Typ einer Komponente zugeordnet sein oder werden. Solche Parameter fallen in die noch zu erläuternde Kategorie "baureihenspezifische Parameter".

Ein Wert des Betriebsparameters und/oder eine Vorschrift und/oder Information zur Ermittlung des Betriebsparameters kann auch einem bestimmten Exemplar einer Komponente zugeordnet werden oder sein. Solche Parameter fallen in die Kategorie "Individualparameter", die ebenfalls noch genauer erläutert wird.

Die Erfindung betrifft auch eine Steuerung für ein Koordinatenmessgerät, insbesondere zur Ausführung des erfindungsgemäßen Verfahrens in einer beliebigen Ausgestaltung, die in dieser Beschreibung beschrieben ist.

Auch ein Koordinatenmessgerät mit einer solchen Steuerung ist Gegenstand der vorliegenden Erfindung.

Weiterhin gehört zum Umfang der Erfindung ein Computerprogramm mit Programmcode zur Durchführung des Verfahrens gemäß einer oder mehreren Ausgestaltungen der vorliegenden Erfindung, wenn das Computerprogramm auf einem Computer abläuft. Dabei kann der Programmcode z. B. im Quelltext vorliegen, sodass er noch kompiliert werden muss, und/oder in maschinenlesbarer Form vorliegen.

Außerdem gehört zum Umfang der Erfindung ein Datenträger, wobei auf dem Datenträger eine (Programm-) Datenstruktur gespeichert ist, die ausgestaltet ist, einen Computer dazu zu veranlassen, das Verfahren gemäß einem oder mehreren Ausgestaltungen der vorliegenden Erfindung auszuführen, wenn der Computer auf die Datenstruktur zugreift.

Auch gehört zum Umfang der Erfindung eine Daten-Speicherstruktur, auf die die Steuerung zugreifen kann bzw. auf die bei Ausführung des Steuerungsverfahrens zugegriffen werden kann. In der Daten-Speicherstruktur sind die Betriebsparameters für die einzelnen Komponenten, die Informationen zur Ermittlung der Betriebsparameter und/oder die Vorschriften zur Ermittlung der Betriebsparameter gespeichert. Dabei ist für jede der Komponenten des Koordinatenmessgeräts eine Datengruppe mit Daten definiert, die den Wert des Betriebsparameters, die Information zu seiner Ermittlung und/oder die Vorschrift zu seiner Ermittlung enthalten. Jede Datengruppe enthält dabei die einer Komponente zugeordneten Daten und kann beispielsweise als File abgespeichert sein. Für eine Komponente, zu der keine relevanten Daten zur Bestimmung der Betriebsparameter vorhanden sind, kann die Datengruppe entfallen.

Insbesondere kann jede Datengruppe in Untergruppen gegliedert sein, wobei jede der Untergruppen die Daten für eine der folgenden Kategorien von Daten aufweist:
- Daten für baureihenspezifische Parameter. Diese Parameter beschreiben insbesondere Eigenschaften der Komponente und werden vorzugsweise mit der Komponente geliefert. Beim Austausch der Komponente oder bei einem Update können solche Parameter getauscht bzw. auf den neuesten Stand gebracht werden, wobei es nicht erforderlich ist, dass das Zielsystem (d.h. das Koordinatenmessgerät bzw. die Maschine) bekannt ist.
- Zielsystemparameter. Diese Parameter hängen vom Zielsystem bzw. der Zielmaschine ab und werden vorzugsweise daher mit dem Zielsystem geliefert. Bei einem Update ist daher der entsprechende Datensatz der Komponente, der auf der Zielmaschine vorhanden ist, zu pflegen. Wird auf einer gegebenen Zielmaschine eine Komponente gegen eine andere Komponente derselben Baureihe bzw. derselben Art getauscht, ändert sich an dem Zielsystemparameter nichts.
- Individualparameter. Diese Parameter beschreiben die individuellen Eigenschaften einer konkreten Komponente. Insbesondere können Sie eine Rückwirkung auf eine Komponente haben, die die konkrete Komponente mit den individuellen Eigenschaften enthält oder trägt. Ein Beispiel für einen solchen Individualparameter ist der Durchmesser oder die Exzentrizität einer Messkugel eines tastenden Messkopfes. Individualparameter enthalten somit Informationen zur Anpassung der Komponente an die aktuelle Konfiguration bzw. das Koordinatenmessgerät und werden daher häufig durch entsprechende Programme ermittelt und zum Gebrauch abgespeichert.

Ausführungsbeispiele der Erfindung werden nun unter Bezugnahme auf die beigefügte Zeichnung beschrieben. Die einzelnen Figuren der Zeichnung zeigen:
- Fig. 1: ein Koordinatenmessgerät in Portalbauweise mit einer schematisch zusätzlich dargestellten Steuerung zum Betrieb des Koordinatenmessgerätes, wobei außerdem ein Magazin und ein Messtisch schematisch dargestellt sind,
- Fig. 2: einen Träger, an den ein Sub-Träger angebracht ist, der wiederum einen Tastkopf als Sensor trägt,
- Fig. 3: schematisch die Reihenfolge der Ermittlung von Betriebsparametern für eine vorgegebene Reihenfolge von Komponenten,
- Fig. 4: für eine Komponente schematisch eine Untergruppierung von Parametern in verschiedene Parameterkategorien und
- Fig. 5: eine Daten-Speicherstruktur.

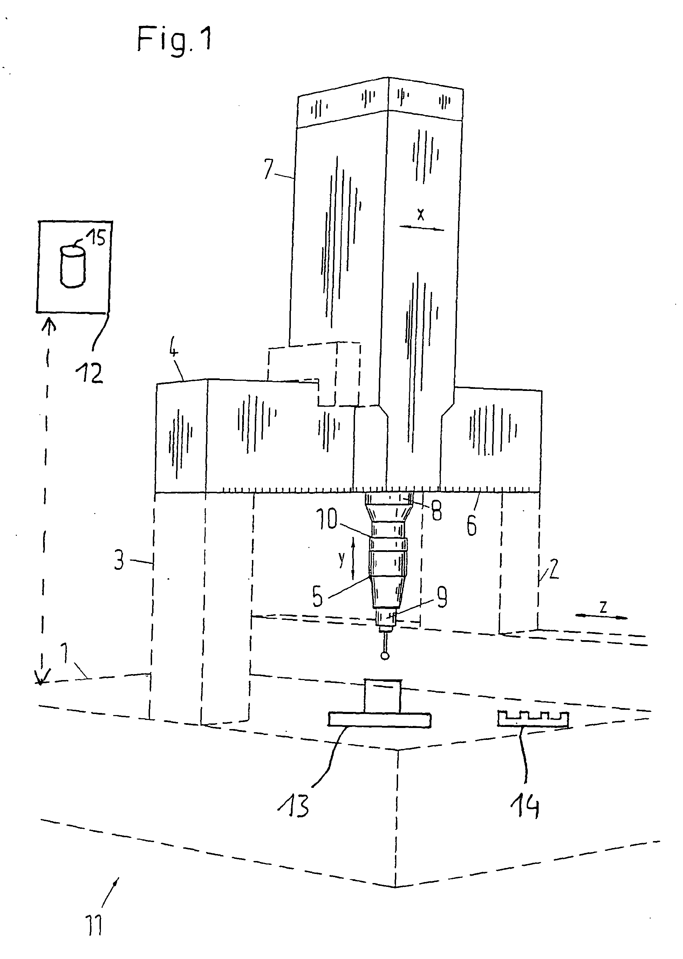

Das in Fig. 1 dargestellte Koordinatenmessgerät (KMG) 11 in Portalbauweise weist einen Messtisch 1 auf, über dem Säulen 2, 3 verfahrbar sind, die zusammen mit einem Querträger 4 ein Portal des KMG 11 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher luftgelagert entlang dem Querträger 4 (in X-Richtung) beweglich ist. Die momentane Position des Querschlittens 7 relativ zu dem Querträger 4 kann anhand einer Maßstabsteilung 6 festgestellt werden. An dem Querschlitten 7 ist eine in vertikaler Richtung bewegliche Pinole 8 gelagert, die an ihrem unteren Ende über eine Montageeinrichtung 10 mit einer Sensoreinrichtung 5 verbunden ist. An der Sensoreinrichtung 5 ist ein Tastkopf 9 abnehmbar angeordnet.

Auf dem Messtisch 1 ist ein zusätzlicher drehbarer Messtisch 13 angeordnet, auf dem ein Messobjekt angeordnet werden kann, welches durch Drehung des Messtisches 13 um eine vertikale Drehachse gedreht werden kann. Ferner ist auf dem Messtisch 1 ein Magazin 14 angeordnet, in dem verschiedene Tastköpfe angeordnet werden können, die gegen den Tastkopf 9 ausgetauscht werden können, oder in dem verschiedene Taststifte angeordnet werden können, die gegen den von dem Tastkopf 9 getragenen Taststift ausgetauscht werden können.

Ferner zeigt Fig. 1 schematisch eine Steuerung 12 des KMG 11, die beispielsweise durch einen Computer realisiert werden kann, der über Software und zumindest einen Datenspeicher 15 verfügt und der über Signal- und Steuerleitungen mit ansteuerbaren Komponenten des Koordinatenmessgerätes verbunden ist, insbesondere mit Antrieben. Außerdem ist die Steuerung 12 über eine Messdatenverbindung mit denjenigen Elementen des KMG 11 verbunden, die zur Ermittlung der Koordinatenmesswerte eingesetzt werden. Da derartige Elemente und Einrichtungen auf dem Gebiet von Koordinatenmessgeräten allgemein bekannt sind, wird hier nicht näher darauf eingegangen.

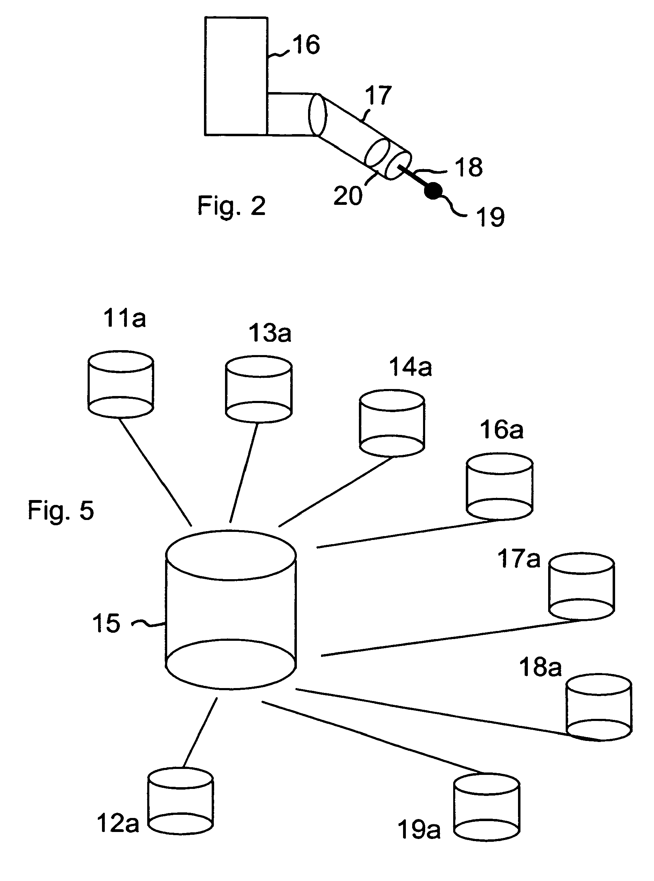

Fig. 2 zeigt einen Träger 16 mit einem daran befestigten Sub-Träger 17, der einen Taststift 18 mit einer Messkugel 19 trägt. Der Träger 16 kann z.B. anstelle der Sensoreinrichtung 5 an dem in Fig. 1 dargestellten Koordinatenmessgerät 11 angebracht werden. Der Sub-Träger ist z. B. ein Dreh-Schwenkgelenk, das an dem in Fig. 2 rechts unten liegenden freien Ende einen Wechselteller 20 aufweist, der ein Auswechseln des angebrachten Taststiftes 18 erlaubt.

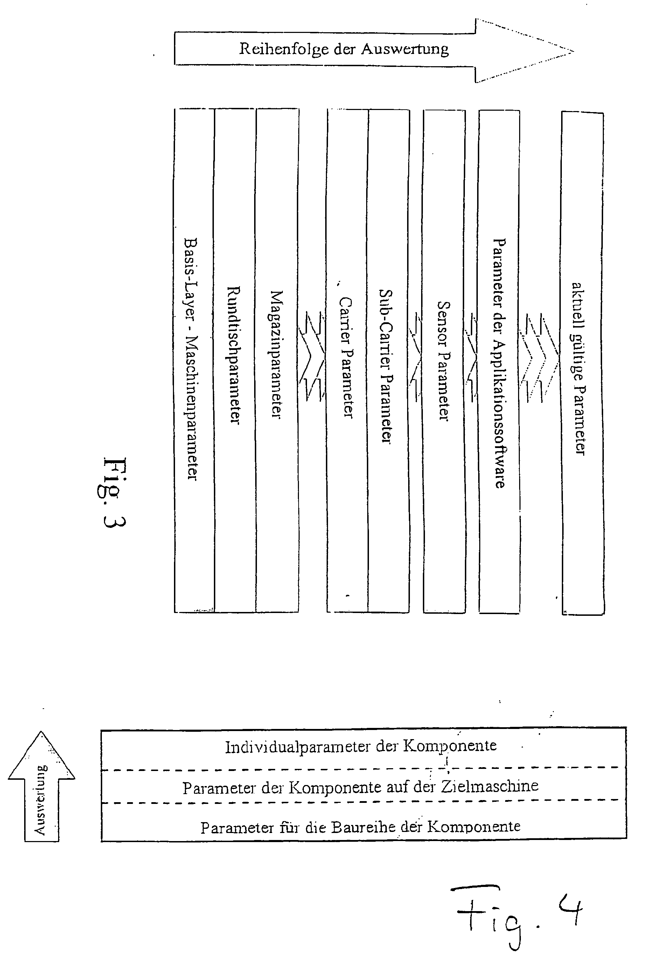

Anhand der Fig. 3 bis 5 wird nun ein bevorzugtes Ausführungsbeispiel für das erfindungsgemäße Verfahren beschrieben.

Fig. 5 zeigt eine Datenstruktur, die beispielsweise in dem Datenspeicher 15 des Computers bzw. der Steuerung 12 gemäß Fig. 1 gespeichert ist. Die Bezugszeichen mit dem Kleinbuchstaben a am Ende, also 11a bis 19a, beziehen sich auf Datengruppen, die jeweils der Komponente des Koordinatenmessgerätes 11 (Fig. 1 und Fig. 2) mit demselben Bezugszeichen, jedoch ohne den Zusatz a, zugeordnet sind. 11 a bezeichnet daher die Datengruppe, die dem Koordinatenmessgerät 11 selbst zugeordnet ist, bzw. der Basis-Maschine, ohne die speziell zusätzlich daran angeordneten Komponenten, wie z.B. Träger 16. 12a bezeichnet die Datengruppe, die der Steuerung 12 zugeordnet ist. Jede der Datengruppen 11a bis 19a enthält möglicherweise, aber nicht zwingend, Betriebsparameter sowie Vorschriften und/oder Informationen zur Ermittlung der Betriebsparameter, wobei die Betriebsparameter, Vorschriften und Informationen derselben Datengruppe der jeweiligen Komponente 11 bis 19 zugeordnet sind.

In jeder der Datengruppen 11a bis 19a können zumindest ein Betriebsparameterwert, eine Vorschrift zur Ermittlung dieses Betriebsparameters und/oder eine Information zur Ermittlung dieses Betriebsparameters gespeichert sein. Da es in der Regel eine Vielzahl von Betriebsparametern gibt, kann bei der im Folgenden beschriebenen Vorgehensweise zur Ermittlung der Betriebsparameter die Reihenfolge der Komponenten nacheinander wiederholt für jeden der Betriebsparameter durchlaufen werden. Es können aber auch in einem Durchlauf der Reihenfolge die Daten mehrerer oder aller Betriebsparameter in den Datengruppen ausgewertet werden. Vereinfacht wird im Folgenden lediglich von einem Betriebsparameter gesprochen. Wenn mehrere Betriebsparameter in einem Durchlauf der Reihenfolge ermittelt werden, wird selbstverständlich in einem folgenden Schritt jeweils die Gültigkeit desselben Betriebsparameters wie in dem vorangegangenen Schritt überprüft bzw. Vorschriften und/oder Informationen zu demselben Betriebsparameter als nunmehr gültig übernommen. Allerdings ist es auch möglich, dass bei der Anwendung einer solchen Vorschrift Informationen oder Werte eines anderen Betriebsparameters von Bedeutung sind und verwendet werden.

In Bezug auf Fig. 3 wird nun der bevorzugte Verfahrensablauf für die Ermittlung eines bestimmten Betriebsparameters beschrieben. Das erfindungsgemäße Verfahren, bei dem die Reihenfolge von Komponenten einer Konfiguration eines Koordinatenmessgerätes vorgegeben ist, kann auch als Schichtmodell oder Schichtverfahren bezeichnet werden. Dabei entspricht die erste, in der Darstellung von Fig. 3 unterste Schicht, der ersten Komponente in der Reihenfolge. Im Fall der Fig. 3 ist dies die Komponente Koordinatenmessgerät bzw. Maschine. Die unterste Schicht ist daher als "Basis-Layer - Maschinenparameter" bezeichnet, um anzudeuten, dass die Parameter der Maschine zunächst als Basis für die Ermittlung des Parameters verwendet werden. Beispielsweise handelt es sich bei dem Parameter um die zulässige Maximalgeschwindigkeit entlang der X-Achse eines kartesischen Koordinatensystems des Koordinatenmessgerätes, z.B. der X-Achse gemäß Fig. 1.

Falls in der zugeordneten Datengruppe 11a ein Wert dieses Betriebsparameters vorhanden ist, wird dieser Wert als zunächst gültiger Wert des Betriebsparameters übernommen. Bei einer Maximalgeschwindigkeit ist in der Regel ein Wert in der Datengruppe der Maschine definiert.

In der nächsthöheren Schicht bzw. an der nächsten Stelle in der Reihenfolge der Ermittlung befindet sich die Komponente Rundtisch bzw. Drehtisch 13. Darauf folgen die Komponenten Magazin 14, Träger bzw. Carrier 16, Sub-Träger bzw. Sub-Carrier 17, Sensor bzw. Taster 19. An oberster Stelle der Schichtstruktur bzw. an letzter Stelle in der Reihenfolge der Komponenten befindet sich die Komponente Steuerung selbst bzw. die Applikationssoftware, mit der Operationen an dem bis dahin gültigen Wert des Betriebsparameters vorgenommen werden können, um z.B. Vorgaben des Anwenders umzusetzen.

Unabhängig von dem hier beschriebenen Ausführungsbeispiel enthält das Verfahren der vorliegenden Erfindung vorzugsweise eines oder mehrere der folgenden Merkmale:
- Wird die Ermittlung eines Betriebsparameters für eine nächsthöhere Schicht bzw. für die nächstfolgende Komponente in der Reihenfolge der Komponenten ausgeführt, wird geprüft, ob für diese Komponente ein Wert des Betriebsparameters definiert ist (z.B. in der zugeordneten Datengruppe abgespeichert ist). Ist dies der Fall, wird der bisher gültige Wert des Betriebsparameters durch diesen für die Komponente definierten Wert als neuer gültiger Wert des Betriebsparameters ersetzt. Ist dies nicht der Fall, bleibt der bisher gültige Wert des Betriebsparameters gültig. Entsprechend wird alternativ oder zusätzlich mit einer Vorschrift und/oder Information zur Ermittlung des Betriebsparameters vorgegangen, wobei also geprüft wird, ob eine solche Vorschrift und/oder Information für die Komponente der aktuellen Schicht bzw. die Komponente an der momentanen Stelle der Reihenfolge definiert ist. Dabei ist es auch möglich, dass die Vorschrift die Anweisung beinhaltet, aus einer tiefer gelegenen Schicht eine Vorschrift in Bezug auf den Betriebsparameter mit einzubeziehen und/oder eine Information aus einer tieferen Schicht mit zu berücksichtigen. Das Schichtverfahren kann daher mit einer Anzahl transparenter Folien verglichen werden, die jeweils optional an einer bestimmten örtlichen Position eine Information aufweisen und die übereinander gelegt werden. An jener örtlichen Position bestimmt diejenige transparente Folie die von oben sichtbare Information, die als höchste Schicht eine Information enthält. Sie überdeckt alle in tiefer gelegenen Schichten an dieser örtlichen Position enthaltenen Informationen. Um auf das Beispiel der Maximalgeschwindigkeit in Richtung der X-Koordinatenachse zurückzukommen, wird beispielsweise die noch von der Maschine gültige Maximalgeschwindigkeit in der Schicht des Tasters 19 ("Sensor Parameter") überdeckt, wenn zu dieser Maximalgeschwindigkeit in den dazwischen liegenden Schichten kein Wert definiert war.
- In der Schichtstruktur bzw. der Reihenfolge der Komponenten ist unabhängig von sonstigen Merkmalen des erfindungsgemäßen Verfahrens vorzugsweise immer die Steuerung selbst bzw. ein Programm oder Programmteil der Steuerung angeordnet. Dies gibt der Steuerung die Möglichkeit, individuelle Korrekturen oder weitere Berechnungen des Betriebsparameters vorzunehmen.
- Die Maschine bzw. das eigentliche Koordinatenmessgerät ohne die üblicherweise auswechselbaren Komponenten ist vorzugsweise immer an erster Stelle der Reihenfolge, d.h. als unterste Schicht, angeordnet.
- Wird die Konfiguration des Koordinatenmessgerätes geändert und z.B. eine Komponente physikalisch entfernt, so wird in der Reihenfolge der Komponenten bzw. in der Struktur der Schichten die entsprechende Komponente bzw. Schicht entfernt. Wird beispielsweise in dem zuvor beschriebenen Beispiel die Komponente Tastkopf 19 entfernt und durch einen Sensor ersetzt, für den keine definiert zu werden brauchen, bleibt der von der Maschine stammende gültige Wert zumindest bis zur Schicht der Applikationssoftware bzw. Steuerung 12 gültig.
- Kommt bei einer Änderung der Konfiguration eine Komponente hinzu, wird die Schicht an einer Stelle der Schichtstruktur eingefügt, vorzugsweise an der Stelle, die durch eine Reihenfolge der Komponentenarten vorgegeben ist. Vorzugsweise ist die Reihenfolge der Komponentenarten durch die Hardwarestruktur möglicher Konfigurationen definiert bzw. orientiert sich daran.

Ein Beispiel für eine Vorschrift zur Ermittlung eines Betriebsparameters ist die insbesondere bereits in der untersten Schicht enthaltene Vorschrift, dass der zugehörige Betriebsparameter in den höheren Schichten zwar erniedrigt (oder im Fall eines anderen Betriebsparameters erhöht) werden kann, nicht aber erhöht werden kann (bzw. in dem anderen Fall erniedrigt werden kann). Die maximal zulässige Geschwindigkeit des Messkopfes darf z.B. in höheren Schichten nicht mehr erhöht werden, sondern nur noch erniedrigt werden.

Fig. 4 zeigt, dass zumindest in einer der Schichten verschiedene Betriebsparameter berücksichtigt werden können, die in die bereits erläuterten unterschiedlichen Parameterkategorien eingeordnet werden können. Alternativ kann der rechteckige Kasten, der in Fig. 4 durch die ununterbrochene Rahmenlinie umrandet ist, auch als Datengruppe in der Datenstruktur gemäß Fig. 5 aufgefasst werden, z.B. als die Datengruppe 17a. Der Pfeil "Auswertung" links in Fig. 4 bedeutet nicht, dass die Parameter innerhalb des Kastens in der Reihenfolge von unten nach oben ausgewertet werden sollen. Der Pfeil bezieht sich vielmehr darauf, dass die Betriebsparameter als Teil ein- und derselben Schicht bei der Auswertung berücksichtigt werden können, die in Fig. 3 schematisch dargestellt ist.

## Patentansprüche

1. Verfahren zum Steuern eines Betriebes eines Koordinatenmessgeräts (11), wobei zumindest ein Betriebsparameter - wie z. B. maximale Geschwindigkeit, maximale Beschleunigung, Grenzort eines Bewegungsbereich oder Grenzwert für eine Signalerkennung - ermittelt wird, der während des Betriebes Gültigkeit haben soll,
**gekennzeichnet durch** folgende Schritte:
a) einer Mehrzahl von Komponenten (11, 12, 13, 14, 16, 17, 18, 19) des Koordinatenmessgeräts(11) wird jeweils ein Wert des Betriebsparameters und/oder eine Vorschrift und/oder Information zur Ermittlung des Betriebsparameters zugeordnet oder kann jeweils zugeordnet werden,
b) für die Mehrzahl der Komponenten (11, 12, 13, 14, 16, 17, 18, 19) wird eine Reihenfolge der Ermittlung des Betriebsparameters vorgegeben,
c) bei der Ermittlung des Betriebsparameters in der vorgegebenen Reihenfolge der Ermittlung wird für jede Komponente (11, 12, 13, 14, 16, 17, 18, 19) wie folgt vorgegangen, wobei mit der Komponente (11) begonnen wird, die in der Reihenfolge an erster Stelle steht:
• ist der Komponente (11, 12, 13, 14, 16, 17, 18, 19) ein Wert des Betriebsparameters zugeordnet, wird dieser als für den Betrieb gültiger Wert des Betriebsparameters übernommen,
• ist der Komponente (11, 12, 13, 14, 16, 17, 18, 19) kein Wert des Betriebsparameters zugeordnet, bleibt ein bisher gültiger Wert des Betriebsparameters weiterhin gültig,
• ist eine weitere Komponente (12, 13, 14, 16, 17, 18, 19) in der Reihenfolge vorhanden, wird mit dieser Komponente fortgefahren.

2. Verfahren nach dem vorhergehenden Anspruch, wobei bei der Ermittlung des Betriebsparameters in der vorgegebenen Reihenfolge gemäß Schritt c) alternativ oder zusätzlich wie folgt vorgegangen wird, wobei mit der Komponente (11) begonnen wird, die in der Reihenfolge an erster Stelle steht:
• wenn der Komponente eine Vorschrift zur Ermittlung des Betriebsparameters zugeordnet ist, wird diese Vorschrift ausgeführt und/oder als gültige Vorschrift übernommen und/oder,
• wenn der Komponente (11, 12, 13, 14, 16, 17, 18, 19) eine Information zur Ermittlung des Betriebsparameters zugeordnet ist, wird die Information als gültige Information übernommen,
• wenn eine weitere Komponente (12, 13, 14, 16, 17, 18, 19) in der Reihenfolge vorhanden ist, wird mit dieser Komponente fortgefahren.

3. Verfahren nach dem vorhergehenden Anspruch, wobei in Schritt b) auch zumindest eine Komponente (11, 12, 13, 14, 16, 17, 18, 19) oder eine Komponentenart in die Reihenfolge aufgenommen wird, die nicht in jeder möglichen Konfiguration des Koordinatenmessgeräts (11) Bestandteil des Koordinatenmessgeräts (11) ist, und wobei im Schritt c) eine Komponente (11, 12, 13, 14, 16, 17, 18, 19) oder Komponentenart nur dann berücksichtigt wird, wenn die Komponente (11, 12, 13, 14, 16, 17, 18, 19) oder zumindest eine Komponente der Komponentenart in einer momentanen Konfiguration des Koordinatenmessgeräts (11) vorhanden ist.

4. Verfahren nach einem der vorhergehenden Ansprüche, wobei in Schritt a) zumindest einer der Komponenten (11, 12, 13, 14, 16, 17, 18, 19) Werte des Betriebsparameters zugeordnet werden, wobei der Wert abhängig von zumindest einer weiteren Komponente (11, 12, 13, 14, 16, 17, 18, 19) und/oder einer Kombination von Komponenten (11, 12, 13, 14, 16, 17, 18, 19) ist, und/oder zumindest einer der Komponenten (11, 12, 13, 14, 16, 17, 18, 19) eine Vorschrift zur Ermittlung des Betriebsparameters zugeordnet wird oder ist, wobei die Vorschrift abhängig von zumindest einer weiteren Komponente (11, 12, 13, 14, 16, 17, 18, 19) und/oder einer Kombination von Komponenten (11, 12, 13, 14, 16, 17, 18, 19) ist.

5. Verfahren nach einem der vorhergehenden Ansprüche, wobei in Schritt a) ein Wert des Betriebsparameters und/oder eine Vorschrift und/oder Information zur Ermittlung des Betriebsparameters einem Typ einer Komponente (11, 12, 13, 14, 16, 17, 18, 19) zugeordnet wird oder ist.

6. Verfahren nach einem der vorhergehenden Ansprüche, ein Wert des Betriebsparameters und/oder eine Vorschrift und/oder Information zur Ermittlung des Betriebsparameters einem bestimmten Exemplar einer Komponente (11, 12, 13, 14, 16, 17, 18, 19) zugeordnet wird.

7. Verfahren nach einem der vorhergehenden Ansprüche, wobei, wenn sich eine Konfiguration des Koordinatenmessgeräts (11) geändert hat, Schritt c) erneut für die geänderte Konfiguration ausgeführt wird.

8. Verfahren nach einem der vorhergehenden Ansprüche, wobei eine der Komponenten (11, 12, 13, 14, 16, 17, 18, 19), für die die Reihenfolge der Ermittlung vorgegeben wird, ein Programm (12) oder Programmteil zur Steuerung des Betriebes des Koordinatenmessgeräts (11) ist, wobei ein Anwender für das Programm oder für den Programmteil in Bezug auf den Betriebsparameter eine Vorgabe machen kann.

9. Steuerung (12) für ein Koordinatenmessgerät (11), insbesondere zur Ausführung eines Verfahrens nach einem der vorhergehenden Ansprüche, wobei die Steuerung ausgestaltet (12) ist, ihre Funktion abhängig von zumindest einem Betriebsparameter des Koordinatenmessgeräts (11) - wie z. B. maximale Geschwindigkeit, maximale Beschleunigung, Grenzort eines Bewegungsbereich oder Grenzwert für eine Signalerkennung - auszuführen, und wobei die Steuerung eine Ermittlungseinrichtung zur Ermittlung des zumindest einen Betriebsparameters, der während des Betriebes Gültigkeit haben soll, aufweist,
**dadurch gekennzeichnet, dass** die Steuerung ausgestaltet ist,
a) einer Mehrzahl von Komponenten (11, 12, 13, 14, 16, 17, 18, 19) des Koordinatenmessgeräts (11) jeweils einen Wert des Betriebsparameters und/oder eine Vorschrift und/oder Information zur Ermittlung des Betriebsparameters zuzuordnen oder eine solche Zuordnung zu verwenden,
b) für die Mehrzahl der Komponenten (11, 12, 13, 14, 16, 17, 18, 19) eine Reihenfolge der Ermittlung des Betriebsparameters vorzugeben oder gemäß einer vorgegebenen Reihenfolge der Ermittlung des Betriebsparameters vorzugehen,
c) bei der Ermittlung des Betriebsparameters in der vorgegebenen Reihenfolge der Ermittlung für jede Komponente (11, 12, 13, 14, 16, 17, 18, 19) wie folgt vorzugehen, wobei mit der Komponente (12, 13, 14, 16, 17, 18, 19) begonnen wird, die in der Reihenfolge an erster Stelle steht:
• ist der Komponente (11, 12, 13, 14, 16, 17, 18, 19) ein Wert des Betriebsparameters zugeordnet, wird dieser als für den Betrieb gültiger Wert des Betriebsparameters übernommen,
• ist der Komponente (11, 12, 13, 14, 16, 17, 18, 19) kein Wert des Betriebsparameters zugeordnet, bleibt ein bisher gültiger Wert des Betriebsparameters weiterhin gültig,
• ist eine weitere Komponente (11, 12, 13, 14, 16, 17, 18, 19) in der Reihenfolge vorhanden, wird mit dieser Komponente fortgefahren.

10. Steuerung nach dem vorhergehenden Anspruch, wobei die Steuerung so ausgestaltet ist, dass bei der Ermittlung des Betriebsparameters in der vorgegebenen Reihenfolge gemäß Schritt c) alternativ oder zusätzlich wie folgt vorgegangen wird, wobei mit der Komponente (11) begonnen wird, die in der Reihenfolge an erster Stelle steht:
• wenn der Komponente (11, 12, 13, 14, 16, 17, 18, 19) eine Vorschrift zur Ermittlung des Betriebsparameters zugeordnet ist, wird diese Vorschrift ausgeführt und/oder als gültige Vorschrift übernommen und/oder,
• wenn der Komponente (11, 12, 13, 14, 16, 17, 18, 19) eine Information zur Ermittlung des Betriebsparameters zugeordnet ist, wird die Information als gültige Information übernommen,
• wenn eine weitere Komponente (12, 13, 14, 16, 17, 18, 19) in der Reihenfolge vorhanden ist, wird mit dieser Komponente fortgefahren.

11. Steuerung nach einem der vorhergehenden Ansprüche, wobei die Steuerung (12) ein Programm (12) oder einen Programmteil aufweist, das/der während der Ermittlung des zumindest einen Betriebsparameters ausgeführt wird und das/der eine der Komponenten (11, 12, 13, 14, 16, 17, 18, 19) ist, für die die Reihenfolge der Ermittlung vorgegeben wird.

12. Steuerung nach dem vorhergehenden Anspruch, wobei die Steuerung (12) derart ausgestaltet ist, dass ein Anwender für das Programm (12) oder für den Programmteil in Bezug auf den Betriebsparameter eine Vorgabe machen kann.

13. Koordinatenmessgerät (11) mit einer Steuerung (12) nach einem der drei vorhergehenden Ansprüche.

14. Computerprogramm (12) mit Programmcode zur Durchführung des Verfahrens nach einem der vorhergehenden Verfahrensansprüche, wenn das Computerprogramm auf einem Computer abläuft.

## Claims

1. Method for controlling operation of a coordinate measuring device (11), at least one operating parameter - for example maximum speed, maximum acceleration, boundary location of a range of movement or limit value for signal detection - which is intended to be valid during operation being determined,
said method being **characterized by** the following steps:
a) a plurality of components (11, 12, 13, 14, 16, 17, 18, 19) of the coordinate measuring device (11) are each assigned or can each be assigned a value of the operating parameter and/or a rule and/or information for determining the operating parameter,
b) a sequence for determining the operating parameter is specified for the plurality of components (11, 12, 13, 14, 16, 17, 18, 19),
c) when determining the operating parameter in the specified determination sequence, the procedure is as follows for each component (11, 12, 13, 14, 16, 17, 18, 19), the procedure starting with the component (11) which is first in the sequence:
• if the component (11, 12, 13, 14, 16, 17, 18, 19) has been assigned a value of the operating parameter, this value is adopted as the value of the operating parameter which is valid for operation,
• if the component (11, 12, 13, 14, 16, 17, 18, 19) has not been assigned a value of the operating parameter, a previously valid value of the operating parameter still remains valid,
• if there is a further component (12, 13, 14, 16, 17, 18, 19) in the sequence, the procedure continues with this component.

2. Method according to the preceding claim, in which, when determining the operating parameter in the specified sequence, the following procedure is alternatively or additionally carried out according to step c), the procedure starting with the component (11) which is first in the sequence:
• if the component has been assigned a rule for determining the operating parameter, this rule is implemented and/or adopted as a valid rule, and/or,
• if the component (11, 12, 13, 14, 16, 17, 18, 19) has been assigned an item of information for determining the operating parameter, the information is adopted as valid information,
• if there is a further component (12, 13, 14, 16, 17, 18, 19) in the sequence, the procedure continues with this component.

3. Method according to the preceding claim, in which, in step b), at least one component (11, 12, 13, 14, 16, 17, 18, 19) or one type of component which is not part of the coordinate measuring device (11) in every possible configuration of the coordinate measuring device (11) is also included in the sequence, and in which, in step c), a component (11, 12, 13, 14, 16, 17, 18, 19) or type of component is taken into account only when the component (11, 12, 13, 14, 16, 17, 18, 19) or at least one component of the type of component is present in a current configuration of the coordinate measuring device (11).

4. Method according to one of the preceding claims, in which, in step a), at least one of the components (11, 12, 13, 14, 16, 17, 18, 19) is assigned values of the operating parameter, the value depending on at least one further component (11, 12, 13, 14, 16, 17, 18, 19) and/or a combination of components (11, 12, 13, 14, 16, 17, 18, 19), and/or at least one of the components (11, 12, 13, 14, 16, 17, 18, 19) is assigned or has been assigned a rule for determining the operating parameter, the rule depending on at least one further component (11, 12, 13, 14, 16, 17, 18, 19) and/or a combination of components (11, 12, 13, 14, 16, 17, 18, 19).

5. Method according to one of the preceding claims, in which, in step a), a value of the operating parameter and/or a rule and/or information for determining the operating parameter are/is assigned or have/has been assigned to a type of component (11, 12, 13, 14, 16, 17, 18, 19).

6. Method according to one of the preceding claims, a value of the operating parameter and/or a rule and/or information for determining the operating parameter being assigned to a particular specimen of a component (11, 12, 13, 14, 16, 17, 18, 19).

7. Method according to one of the preceding claims, in which, when a configuration of the coordinate measuring device (11) has changed, step c) is carried out again for the changed configuration.

8. Method according to one of the preceding claims, one of the components (11, 12, 13, 14, 16, 17, 18, 19) for which the determination sequence is specified being a program (12) or program part for controlling operation of the coordinate measuring device (11), a user being able to specify the operating parameter for the program or for the program part.

9. Controller (12) for a coordinate measuring device (11), in particular for carrying out a method according to one of the preceding claims, the controller (12) being configured to perform its function on the basis of at least one operating parameter of the coordinate measuring device (11)-for example maximum speed, maximum acceleration, boundary location of a range of movement or limit value for signal detection - and the controller having a determination device for determining the at least one operating parameter which is intended to be valid during operation,
**characterized in that** the controller is configured
a) to respectively assign a value of the operating parameter and/or a rule and/or information for determining the operating parameter to a plurality of components (11, 12, 13, 14, 16, 17, 18, 19) of the coordinate measuring device (11) or to use such an assignment,
b) to specify a sequence for determining the operating parameter for the plurality of components (11, 12, 13, 14, 16, 17, 18, 19) or to proceed according to a specified sequence for determining the operating parameter,
c) to proceed as follows for each component (11, 12, 13, 14, 16, 17, 18, 19) when determining the operating parameter in the specified determination sequence, the procedure starting with the component (12, 13, 14, 16, 17, 18, 19) which is first in the sequence:
• if the component (11, 12, 13, 14, 16, 17, 18, 19) has been assigned a value of the operating parameter, this value is adopted as the value of the operating parameter that is valid for operation,
• if the component (11, 12, 13, 14, 16, 17, 18, 19) has not been assigned a value of the operating parameter, a previously valid value of the operating parameter still remains valid,
• if there is a further component (11, 12, 13, 14, 16, 17, 18, 19) in the sequence, the procedure continues with this component.

10. Controller according to the preceding claim, the controller being configured in such a manner that, when determining the operating parameter in the specified sequence, the following procedure is alternatively or additionally carried out according to step c), the procedure starting with the component (11) which is first in the sequence:
• if the component (11, 12, 13, 14, 16, 17, 18, 19) has been assigned a rule for determining the operating parameter, this rule is implemented and/or adopted as a valid rule, and/or,
• if the component (11, 12, 13, 14, 16, 17, 18, 19) has been assigned an item of information for determining the operating parameter, the information is adopted as valid information,
• if there is a further component (12, 13, 14, 16, 17, 18, 19) in the sequence, the procedure continues with this component.

11. Controller according to one of the preceding claims, the controller (12) having a program (12) or a program part which is executed during the determination of the at least one operating parameter and is one of the components (11, 12, 13, 14, 16, 17, 18, 19) for which the determination sequence is specified.

12. Controller according to the preceding claim, the controller (12) being configured in such a manner that a user can specify the operating parameter for the program (12) or for the program part.

13. Coordinate measuring device (11) having a controller (12) according to one of the three preceding claims.

14. Computer program (12) having program code for carrying out the method according to one of the preceding method claims if the computer program runs on a computer.

## Revendications

1. Procédé de commande d'un fonctionnement d'un appareil de mesure de coordonnées (11), au moins un paramètre de fonctionnement, tel que la vitesse maximale, l'accélération maximale, la limite d'une zone de déplacement ou la valeur limite d'une reconnaissance de signal, étant déterminé, lequel doit être valable pendant le fonctionnement,
**caractérisé par** les étapes suivantes :
a) à une pluralité de composants (11, 12, 13, 14, 16, 17, 18, 19) de l'appareil de mesure de coordonnées (11) est associée respectivement ou peut être associée respectivement une valeur du paramètre de fonctionnement et/ou une prescription et/ou une information pour la détermination du paramètre de fonctionnement,
b) pour la pluralité des composants (11, 12, 13, 14, 16, 17, 18, 19) est prescrit un ordre de détermination du paramètre de fonctionnement,
c) lors de la détermination du paramètre de fonctionnement dans l'ordre prescrit de détermination, il est procédé comme suit pour chaque composant (11, 12, 13, 14, 16, 17, 18, 19), étant commencé par le composant (11) qui se trouve en première place dans l'ordre :
- si au composant (11, 12, 13, 14, 16, 17, 18, 19) est associée une valeur du paramètre de fonctionnement, celle-ci est reprise comme valeur du paramètre de fonctionnement valable pour le fonctionnement,
- si au composant (11, 12, 13, 14, 16, 17, 18, 19) n'est associée aucune valeur du paramètre de fonctionnement, une valeur du paramètre de fonctionnement valable jusqu'à présent reste valable en outre,
- si un autre composant (12, 13, 14, 16, 17, 18, 19) est présent dans l'ordre, il est continué par ce composant.

2. Procédé selon la revendication précédente, lors de la détermination du paramètre de fonctionnement dans l'ordre prescrit selon l'étape c), étant procédé en outre ou en variante comme suit, étant commencé par le composant (11) qui se trouve en première place dans l'ordre :
- si au composant est associée une prescription pour la détermination du paramètre de fonctionnement, cette prescription est réalisée et/ou reprise comme prescription valable et/ou,
- si au composant (11, 12, 13, 14, 16, 17, 18, 19) est associée une information pour la détermination du paramètre de fonctionnement, l'information est reprise comme information valable,
- si un autre composant (12, 13, 14, 16, 17, 18, 19) est présent dans l'ordre, il est continué par ce composant.

3. Procédé selon la revendication précédente, à l'étape b) étant enregistré aussi au moins un composant (11, 12, 13, 14, 16, 17, 18, 19) ou un type de composant dans l'ordre qui ne fait pas partie de l'appareil de mesure de coordonnées (11) dans chaque configuration possible de l'appareil de mesure de coordonnées (11), et à l'étape c) étant pris en compte un composant (11, 12, 13, 14, 16, 17, 18, 19) ou un type de composant uniquement si les composants (11, 12, 13, 14, 16, 17, 18, 19) ou au moins un composant du type de composant est présent dans une configuration momentanée de l'appareil de mesure de coordonnées (11).

4. Procédé selon l'une quelconque des revendications précédentes, à l'étape a) étant associées des valeurs du paramètre de fonctionnement à au moins l'un des composants (11, 12, 13, 14, 16, 17, 18, 19), la valeur étant fonction d'au moins un autre composant (11, 12, 13, 14, 16, 17, 18, 19) et/ou d'une combinaison de composants (11, 12, 13, 14, 16, 17, 18, 19), et/ou à au moins l'un des composants (11, 12, 13, 14, 16, 17, 18, 19) étant associée une prescription pour la détermination du paramètre de fonctionnement, la prescription étant fonction d'au moins un autre composant (11, 12, 13, 14, 16, 17, 18, 19) et/ou d'une combinaison de composants (11, 12, 13, 14, 16, 17, 18, 19).

5. Procédé selon l'une quelconque des revendications précédentes, à l'étape a) étant associée une valeur du paramètre de fonctionnement et/ou une prescription et/ou une information pour la détermination du paramètre de fonctionnement à un type d'un composant (11, 12, 13, 14, 16, 17, 18, 19).

6. Procédé selon l'une quelconque des revendications précédentes, une valeur du paramètre de fonctionnement et/ou une prescription et/ou une information pour la détermination du paramètre de fonctionnement étant associée à un exemplaire déterminé d'un composant (11, 12, 13, 14, 16, 17, 18, 19).

7. Procédé selon l'une quelconque des revendications précédentes, si une configuration de l'appareil de mesure de coordonnées (11) s'est modifiée, l'étape c) étant réalisée de nouveau pour la configuration modifiée.

8. Procédé selon l'une quelconque des revendications précédentes, l'un des composants (11, 12, 13, 14, 16, 17, 18, 19) pour lequel est prescrit l'ordre de détermination, est un programme (12) ou une partie de programme pour la commande du fonctionnement de l'appareil de mesure de coordonnées (11), un utilisateur pouvant faire une prescription pour le programme ou la partie de programme par rapport au paramètre de fonctionnement.

9. Commande (12) pour un appareil de mesure de coordonnées (11), en particulier pour la réalisation d'un procédé selon l'une quelconque des revendications précédentes, la commande étant configurée (12) afin de réaliser sa fonction selon au moins un paramètre de fonctionnement de l'appareil de mesure de coordonnées (11), tel que la vitesse maximale, l'accélération maximale, la limite d'une zone de déplacement ou la valeur limite d'une reconnaissance de signal et la commande présentant un dispositif de détermination pour la détermination de l'au moins un paramètre de fonctionnement qui doit être valable pendant le fonctionnement,
**caractérisée en ce que** la commande est configurée
a) afin d'associer à une pluralité de composants (11, 12, 13, 14, 16, 17, 18, 19) de l'appareil de mesure de coordonnées (11) respectivement une valeur du paramètre de fonctionnement et/ou une prescription et/ou une information pour la détermination du paramètre de fonctionnement ou d'utiliser une telle association,
b) afin de prescrire pour la pluralité des composants (11, 12, 13, 14, 16, 17, 18, 19) un ordre de détermination du paramètre de fonctionnement ou de procéder selon un ordre prescrit de détermination du paramètre de fonctionnement,
c) afin de procéder comme suit lors de la détermination du paramètre de fonctionnement dans l'ordre prescrit de détermination pour chaque composant (11, 12, 13, 14, 16, 17, 18, 19), étant commencé par le composant (12, 13, 14, 16, 17, 18, 19) qui se trouve en première place dans l'ordre :
- si au composant (11, 12, 13, 14, 16, 17, 18, 19) est associée une valeur de paramètre de fonctionnement, celle-ci est reprise comme valeur du paramètre de fonctionnement valable pour le fonctionnement,
- si au composant (11, 12, 13, 14, 16, 17, 18, 19) n'est associée aucune valeur de paramètre de fonctionnement, une valeur valable jusqu'à présent du paramètre de fonctionnement reste en outre valable,
- si un autre composant (12, 13, 14, 16, 17, 18, 19) est présent dans l'ordre, il est continué par ce composant.

10. Commande selon la revendication précédente, la commande étant configurée de sorte que lors de la détermination du paramètre de fonctionnement dans l'ordre prescrit selon l'étape c), étant procédé en outre ou en variante comme suit, étant commencé par le composant (11) qui se trouve en première place dans l'ordre :
- si au composant (11, 12, 13, 14, 16, 17, 18, 19) est associée une prescription pour la détermination du paramètre de fonctionnement, cette prescription est réalisée et/ou reprise comme prescription valable et/ou,
- si au composant (11, 12, 13, 14, 16, 17, 18, 19) est associée une information pour la détermination du paramètre de fonctionnement, l'information est reprise comme information valable,
- si un autre composant (12, 13, 14, 16, 17, 18, 19) est présent dans l'ordre, il est continué par ce composant.

11. Commande selon l'une quelconque des revendications précédentes, la commande (12) présentant un programme (12) ou une partie de programme qui est réalisée pour la détermination de l'au moins un paramètre de fonctionnement et qui est l'un des composants (11, 12, 13, 14, 16, 17, 18, 19), pour lequel l'ordre de détermination est prescrit.

12. Commande selon la revendication précédente, la commande (12) étant configurée de telle sorte qu'un utilisateur puisse faire une prescription pour le programme (12) ou pour la partie de programme par rapport au paramètre de fonctionnement.

13. Appareil de mesure de coordonnées (11) avec une commande (12) selon l'une quelconque des trois revendications précédentes.

14. Programme informatique (12) avec un code de programme pour la réalisation du procédé selon l'une quelconque des revendications précédentes, si le programme informatique s'exécute sur un ordinateur.
